# EUROPEAN PATENT APPLICATION

(11) **EP 1 657 943 A1**
(43) Date of publication of application: **17.05.2006**
(21) Application number: 04292693.1
(22) Date of filing: 10.11.2004
(51) Int. Cl.: H04Q 7/38

(54) **A method for ensuring secure access to a telecommunication system comprising a local network and a PLMN**

(71) Applicant: ALCATEL, 75008 Paris (FR)
(72) Inventor: Bazin, Claire, 75014 Paris (FR); Millard, Herve, 91430 Igny (FR)
(74) Representative: Richardt, Markus Albert

(57) **Abstract**

To lessen the burden of setting up and maintaining an own authentication process within a local network (102), it is proposed to use a telecommunication system (101) comprising a local network (102) and a public land mobile network (103), wherein the local network (102) has an authorization module (106) and the public land mobile network (103) has an authentication network (105), wherein both modules (105, 106) cooperate such that a user terminal (104) requesting access to the telecommunication system (101) is first authenticated by the authentication module (105) and then authorized by the authorization module (106).

## Description

### Field of the invention

The present invention relates to a method for ensuring security in a telecommunication system comprising a local network and a public land mobile network. It further relates to such a telecommunication system as well as to an authentication module and an authorization module for use in such a telecommunication system.

### Background and prior art

Companies often have local networks like a corporate wireless local area network (CWLAN) to provide access to intranet, internet and telephony services for the employees. A very important issue is security, as it should not be possible that a third person gets access to the company's internal information and services. Strong user authentication mechanisms have to be put in place. This is a burden for the company with respect to resources and costs.

In IEEE 802.11x (WLAN) networks, for example, there are two main approaches for ensuring secure access to the companies telecommunication system. One is to distribute subscriber identity module (SIM) cards to all employees to setup an authentication system based on Extensible Authentication Protocol (EAP) and SIM cards. The other possibility is to setup and manage a public key infrastructure (PKI) to setup an authentication system based on EAP and Transport Layer Security (TLS).

Other authentication systems are considered to be too weak, like passwords, difficult to manage, like pre-shared keys, or not convenient in a corporate context, like one-time passwords.

After a user requesting access has been authenticated, he is granted access to the telecommunication system, respectively certain services through an authorization process. Authentication and authorization are normally done by so-called authentication, authorization and accounting (AAA) services.

It is an object of the present invention to provide the possibility especially for companies to make sure, only certain users get access to their telecommunication system, without too much need for internal resources.

### Summary of the invention

The present invention provides for a method of ensuring secure access to a telecommunication system according to claim 1, a telecommunication system according to claim 6, an authentication module according to claim 10 and an authorization module according to claim 11. Advantageous embodiments are found in the dependent claims.

The basic idea of the invention is to separate the step of authentication and the step of authorization by using two distinct networks, one being a public land mobile network (PLMN) for authentication and the other being the corporate local network for authorization. This has the advantage that the authentication facilities that are provided per se by a PLMN, especially if run by a mobile network operator (MNO), are utilized and thus the company does not have to setup its own authentication facilities. The task of authorizing a user is still kept within the corporate domain for reasons of security.

When users try to access the local network, e.g. a corporate network, they are first authenticated on the level of the PLMN, e.g. by the MNO. Once the users are authenticated by the authentication module of the PLMN and this information received by the authorization module of the local network, then it is up to the authorization module on the local network level to authorize them according to a defined policy. In case of a corporate network, one could give full or limited right to different kinds of employees or guests. The company is relieved form the burden of investing resources and money to provide and maintain an own authentication system, but it still has full authority on what rights to give to whom.

The present invention is particularly advantageous for embodiments, where the authentication process is based on EAP, wherein the local network comprises or is a WLAN and/or wherein the authentication module and the authorization module communicate by RADIUS (Remote Authentication Dial-In user Service), but not limited to such embodiments.

Preferred embodiments of the invention will be explained in greater detail by making reference to the drawings in which:

### Brief description of the drawings

Figure 1 is a block diagram showing the basic principle of the telecommunication system of the present invention and the method of ensuring secure access to it;
Figure 2 shows a schema of a preferred embodiment of the invention; and
Figure 3 is a diagram illustrating a preferred embodiment of authenticating and authorizing.

### Detailed description

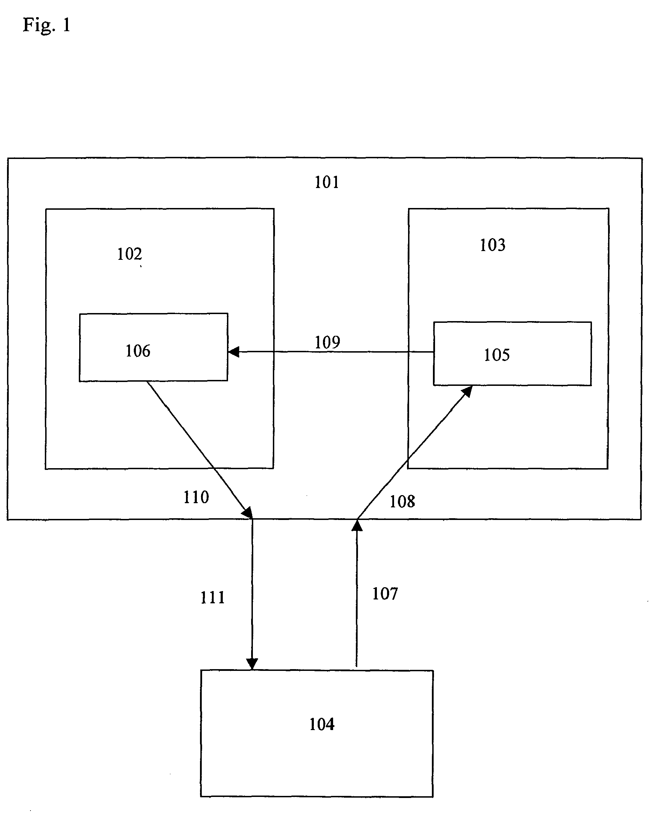

Figure 1 shows the basic principle of the telecommunication system 101 and of the method of ensuring secure access to it according to the present invention in a block diagram. The telecommunication system 101 comprises a local network 102 and a PLMN 103, wherein the local network 102 has an authorization module 106 and the PLMN 103 has an authentication module 104.

If a user or a user terminal 104 requests access (arrow 107) to the telecommunication system 101, this demand is first forwarded to the authentication module 105 of the PLMN 103 as a request for authentication (arrow 108). If the authentication is successful, this information is forwarded to the local network 102 (arrow 109). If the authentication is not successful, access is denied to this user 104. Any kind of known authentication process may be used.

Once the user 104 has been successfully authenticated and this information has been received by the authorization module 106 of the local network 102, the user 104 may be authorized by the authorization module 106 for different services provided by or via the local network 102 according to e.g. a user profile (arrow 110). With accomplished authorization, the user 104 is granted access to the telecommunication system 101 (arrow 111). Any known authorization process may be used. If an accounting process, i.e. keeping track of the user's activities while accessing the networks' resources, is desired, this can be implemented as known by the person skilled in the art.

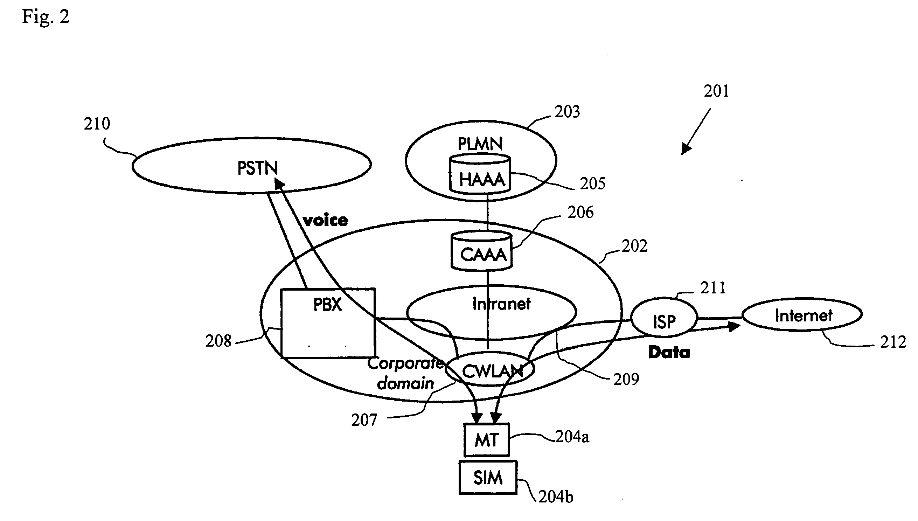

Figure 2 shows a preferred embodiment of the telecommunication system 201 comprising a local network 202 being corporate domain and a PLMN 203. The local network 202 has several components: a CWLAN 207, an intranet 209 and a public branch exchange (PBX) 208, with the possibilities to connect to a public switched telephone network (PSTN) 210 via the PBX 208 for voice transfer or to the internet 212 via an internet service provider (ISP) 211 for data transfer.

A mobile terminal (MT) 204a identified by a subscriber identity module (SIM) card 204b that requests access to the telecommunication system 201 to use the intranet 209, the internet 212 or the telephone (PSTN 210), is first connected with a corporate AAA module (CAAA) 206 being part of the local network 202. The CAAA 206 establishes a connection with a home AAA module (HAAA) 205 of the PLMN 203 for authentication of the MT 204a. If the authentication by the HAAA 205 is successful, the MT 204a is referred back to the CAAA 206 for authorization and actual access to the local network 202 and its services.

Preferably, the PLMN 203 is operated by an external MNO. Nowadays, MNOs are setting up roaming agreements with WLNA hotspot owners, in order that MNO subscribers equipped with a WLAN enabled MT can benefit from these WLAN hotspots, being authenticated, authorized and charged by their MNO. The authentication phase can rely on the SIM card 204b usage or on PKI, that both yield strong security guaranties. The underlying coupling architecture is preferably designed according to the known "scenario 2 coupling architecture" as defined by the 3GPP System Architecture Group (technical specification 23234) and the IETF (for EAP/SIM authentication and RADIUS). According to the present invention, the agreement between the PLMN 203 and the CWLAN 207 of the local network 202 is corresponding to said architecture, with the difference, that only authentication is done on the level of the PLMN 203 by the HAAA 205, and the task of authorizing remains on the level of the local network 202 and is done by the CAAA 206.

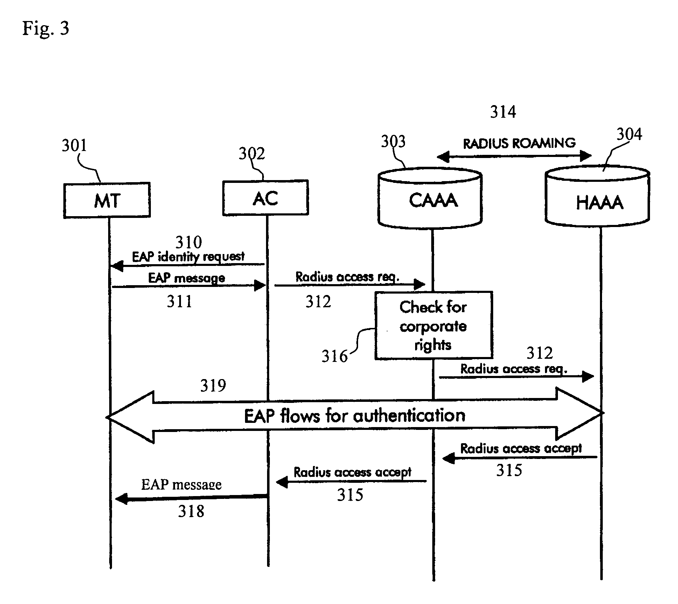

This is illustrated more in detail by Figure 3 showing a diagram illustrating an example for authenticating and authorizing. A MT 301 that wants to get access to the local network gets in contact with an access point (AC) 302 of the CWLAN of the local network. The AC 302'sends an EAP identity request 310 to the MT 301 that is answered by the MT 301 with an EAP message 311. The EAP message 311 contains the network access identifier (NAI) of the MT 301, the format of which is defined in the standard RFC 2486. This information is forwarded to the CAAA 303 via a RADIUS access request 312 from the AC 302. The CAAA 303 uses the NAI for routing the RADIUS access request 312 to the HAAA 304 (RADIUS roaming mechanism 314) to have the MT 301 authenticated by the HAAA 304. A successful authentication by the HAAA 304 is communicated to the CAAA 303 via a radius access accept message 315. The CAAA 303 then checks on corporate rights (step 316) of the authenticated user for authorization. Depending upon the result of authorization, the RADIUS access accept message 315 is forwarded to the AC 302, which then sends this result to the MT 301 via EAP message 318 for granting access to the local network to the MT 301. If the authentication fails or if the user has no access rights, access is denied. Thus, the EAP flows for authentication and authorization reach from the MT 301 over AC 302 and CAAA 303 up to the HAAA 304.

After a WLAN session has started, the CAAA 303 can in addition, stock or forward a RADIUS accounting flow from the AC 302 to the HAAA 304 of the PLMN according to the corporate policy and the roaming agreement between company and MNO.

One example of an application of the present invention will now be explained. A company has provided its employees with GSM/GPRS phones with adequate subscriptions to an MNO. The mobile phones are WLAN enabled and have sufficient capabilities to support some packet switch based applications, e.g. intranet resources access, internet access, business applications, session initiation protocol (SIP) based client allowing the mobile phone to interact through WLAN with the companies PBX, thus becoming a corporate mobile phone.

The company wants to enable these services by deploying a WLAN coverage. It then sets up a telecommunication system with a MNO comprising the company's local network and the MNO's PLMN, such that the authentication is done on the level of the PLMN and the authorization is done on the level of the local network.

When an employee connects to the CWLAN, the RADIUS accounting flow generated by the AC toward the PLMN according to the scenario 2 coupling architecture is blocked by the CAAA, which has the knowledge that the user is an employee. When a visitor connects to the CWLAN, he is also authenticated by his MNO thanks to roaming between different PLMNs, and a restricted access, e.g. only to internet, can be granted by the CAAA. According to corporate policy, this access can be offered for free. Then the RADIUS accounting flows are blocked by the CAAA. Or this access can be charged. Then the RADIUS accounting flows are forwarded toward the PLMN.

It is possible to have other WLAN enabled corporate devices than mobile phones use the WLAN coverage, such as laptops. They just need to be adapted to the specific authentication process. If the authentication were done by SIM cards, they would need a SIM card each. If authentication is based on PKI, they each need their own key.

If a standard authentication, authorizing and accounting protocol like RADIUS is utilized, it is possible for visitors with subscriptions with other MNOs than the company to be granted access to the local network, if there is a roaming agreement between the different MNOs.

In preferred embodiments, the CAAA can implement EAP/SIM or PKI authentication and memorize some authentication vectors in case the PLMN fails. If the PLMN were unreachable, then the CAA would take in charge the authentication reusing the memorized authentication vector. This would punctually weaken security, but would have the advantage, that access to the local network is not entirely dependent of the PLMN. If communication based on GSM is used, such a feature is per se implemented in the mobile switching centers (MSC).

Although having described several preferred embodiments of the invention, those skilled in the art would appreciate that various changes, alterations, and substitutions can be made without departing from the spirit and concepts of the present invention. The invention is, therefore, claimed in any of its forms or modifications with the proper scope of the appended claims. For example various combinations of the features of the following dependent claims could be made with the features of the independent claim without departing from the scope of the present invention. Furthermore, any reference numerals in the claims shall not be construed as limiting scope.

### List of Reference Numerals

- 101: telecommunication system
- 102: local network
- 103: PLMN
- 104: user
- 105: authentication module
- 106: authorization module
- 107: requesting access
- 108: requesting authentication
- 109: informing of successful authentication
- 110: authorizing
- 111: granting access
- 201: telecommunication system
- 202: corporate local network
- 203: PLMN
- 204a: mobile terminal
- 204b: subscriber identity module
- 205: home AAA module
- 206: corporate AAA module
- 207: corporate WLAN
- 208: private branch exchange
- 209: intranet
- 210: public switched telephone network
- 211: internet service provider
- 212: internet
- 301: mobile terminal
- 302: access point

- 303: corporate AAA module
- 304: home AAA module
- 310: EAP identity request
- 311: EAP message
- 312: RADIUS access request
- 314: RADIUS roaming
- 315: RADIUS access accept
- 316: check for corporate rights
- 318: EAP message
- 319: EAP flow

## Claims

1. A method of ensuring secure access to a telecommunication system comprising a local network and a public land mobile network by an authentication and authorization process, wherein the step of authentication is done on the level of the public land mobile network and the step of authorization is done on the level of the local network.

2. The method of claim 1, wherein the local network comprises an authorization module an the public land mobile network comprises an authentication module, wherein the authentication module authenticates a user and informs the authorization module of the successful authentication, the authorization module then authorizing the user.

3. The method of claim 1 or 2, wherein the authentication process is based on the Extensible Authentication Protocol.

4. The method of any of claims 1 to 3, wherein a wireless local area network is used as part of or as the local network.

5. The method of any of claims 2 to 4, wherein the authentication module and the authorization module communicate using Remote Authentication Dial-In User Service.

6. A telecommunication system (101) comprising a local network (102) and a public land mobile network (103), wherein the local network (102) has an authorization module (106) and the public land mobile network (103) has an authentication module (105), wherein both modules (105, 106) are arranged to cooperate such that a user terminal (104) requesting access to the telecommunication system (101) is first authenticated by the authentication module (105) and then authorized by the authorization module (106).

7. The telecommunication system according to claim 6, wherein the local network (102) comprises a wireless local area network (207).

8. The telecommunication system according to claim 6 or 7, wherein the authentication module (105) and the authorization module (106) are arranged to use Remote Authentication Dial-In User Service.

9. The telecommunication system according to any of claims 6 to 8, wherein the authentication module (105) is arranged to use the Extensible Authentication Protocol.tication module (105) for use in a telecommunication system (101) according to claims 6 to 9, arranged to be operable in a public land mobile network (103), and to cooperate with an authorization module (106) such that a user terminal (104) requesting access to the telecommunication system (101) is first authenticated by the authentication module (105) and then authorized by the authorization module (106).

10. Authorization module (106) for use in a telecommunication system (101) according to claims 6 to 9, arranged to be operable in a local network and to cooperate with an authentication module (105) such that a user terminal (104) requesting access to the telecommunication system (101) is first authenticated by the authentication module (105) and then authorized by the authorization module (106).
